# EUROPEAN PATENT SPECIFICATION

(11) **EP 2 648 572 B1**
(45) Date of publication and mention of the grant of the patent: **16.09.2015**
(21) Application number: 11846447.8
(22) Date of filing: 02.12.2011
(51) Int. Cl.: A47C 21/00, A61H 1/00, H02N 15/00

(54) **Mattress**
Matratze
Matelas

(30) Priority: 07.12.2010 FI 20100413
(43) Date of publication of application: 16.10.2013
(73) Proprietor: Suorsa, Jouni, 90900 Kiiminki (FI)
(72) Inventor: Suorsa, Jouni, 90900 Kiiminki (FI)
(74) Representative: Kolster Oy Ab
(86) International application number: PCT/FI2011/051073
(87) International publication number: WO 2012/076752

(56) References cited:
- WO-A1-2009/113658
- CN-A- 1 723 822
- CN-Y- 201 161 063
- DE-A1- 4 407 473
- JP-U- 64 043 753
- KR-B1- 100 355 098
- US-A1- 2005 091 744

## Description

### Field

The invention relates to a mattress and, particularly, to a mattress equipped with a mechanism to cause motion in the structure of the mattress.

### Background

Prior art teaches beds equipped with electric motors to adjust the posture of the bed. For example, the electric motor may be used to raise one side of the bed to raise a person lying on the bed to a sitting position. Prior art also teaches beds equipped with electric motors to cause continuous motion in the bed structure to provide a massaging functionality. A problem with electric motors is that they are noisy, which makes them impractical in some use cases. For example, a person may have difficulties in falling asleep while the electric motor is operating.

DE4407473A1 discloses a rocking bed having a first frame with which the bed is mounted onto a foundation and a second frame for the mattress. The two frames are joined by a linkage allowing the upper frame to pivot about a horizontal axis. This pivoting motion is caused by an electric motor. The drive consists of a magnet arrangement on one frame and a yoke on the other, the magnet arrangement producing a travelling field. The magnet-yoke combination form a linear electric motor. The linkage comprises pairs of triangular plates attached to the frames, the plates having turned up edges against which the pivoting strip linking the plates will abut at each end of its angular motion.

KR 100355098 B1 discloses a mattress according to the preamble of claim 1.

### Brief description

According to an aspect of the present invention, there is provided a mattress as specified in claim 1. Embodiments of the invention are defined in the dependent claims.

### List of drawings

Embodiments of the present invention are described below, by way of example only, with reference to the accompanying drawings, in which
Figure 1 illustrates a mattress according to an embodiment of the invention as viewed from a side from a head end towards a foot end of the mattress (or vice versa);
Figure 2 illustrates the mattress of Figure 1 when an object is placed on the mattress, thereby depressing elastic supporting members of the mattress;
Figures 3 and 4 illustrates motion of the mattress in operation; and
Figure 5 illustrates the mattress according to an embodiment of the invention when viewed from above/below.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It has been observed that gentle swinging facilitates a human to fall into sleep. Such a phenomenon is observed by every parent trying to make a baby to sleep, but the same method applies to adults as well. A mattress according an embodiment of the present invention provides a mechanism to provide a person lying on the bed with gentle back and forth motion. The embodiment utilizes magnets instead of electric motors to gently swing a person lying on the bed, thereby facilitating the person to fall into sleep. Motion achieved by using magnetic interaction provides a silent swinging mechanism, contrary to systems based on noisy electric motors.

An embodiment of the invention provides a mattress, comprising a base structure providing the mattress with a frame. The base structure comprises supporting means disposed inside the mattress to provide an object placed on the mattress with vertical elastic support, wherein the supporting means are elastic both vertically and horizontally. The mattress further comprises first magnetic means coupled mechanically with the supporting means such that motion of the first magnetic means causes motion of the supporting means, wherein the motion of the first magnetic means is responsive to magnetic fields sensed by the first magnetic means. The mattress further comprises second magnetic means fixed to the base structure of the mattress and, in operation, magnetically coupled with the first magnetic means such that a variation in the magnetic field generated between the first and second magnetic means is arranged to cause motion between the first magnetic means and the second magnetic means, thereby moving the supporting means in accordance with the magnetic field. The mattress further comprises generator means for generating a variable magnetic field between the first and second magnetic means so as to cause back and forth motion of the first magnetic means and the supporting means.

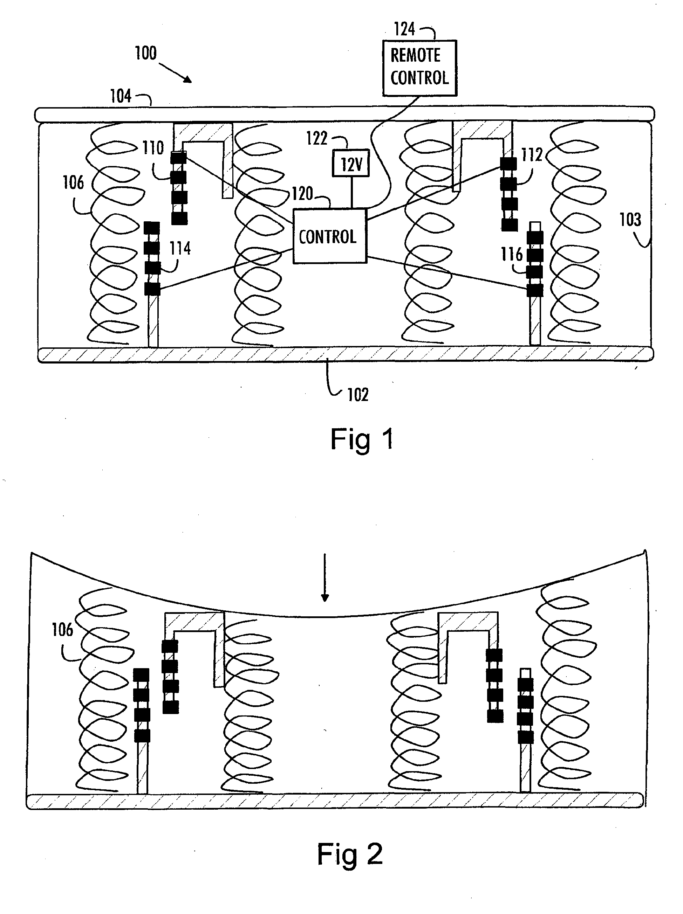

Figure 1 illustrates an embodiment of the mattress. Referring to Figure 1, the base structure 102 of the mattress 100 comprises a frame that provides the mattress with its form. The frame forming a base (bottom) of the mattress 100, and the frame may comprise side frames perpendicular to the base and circumferentially arranged on the sides of the mattress to provide a side structure, as is known in connection with mattresses provided with the frame. The frame may comprise rigid material such as wood or metal at least in the base, and/or it may comprise elastic material in the base and/or on the sides 103. The structure comprises the above-mentioned supporting means that may be formed by a plurality of springs 106 disposed uniformly throughout the mattress so as to make the mattress deformable according to the weight of an object (a human, for example) placed on the mattress. The springs may have varying elastic properties to provide a progressive and comfortable elasticity. The springs may be arranged in the mattress such that they provide vertical elasticity, in response to the weight laid on the mattress when in use, and horizontal elasticity. The latter may be achieved by providing a sufficient amount of free space around each spring so that each spring may move laterally and/or longitudinally inside the mattress. It should be understood that the springs may be replaced by other elastic members having similar properties. Instead of, or in addition to the springs, the supporting means may be construed to comprise the side frames 103 of the mattress and/or a top side 104 of the mattress. The side frames support the structure of the mattress along with the top side, and they both support the person/object lying on the mattress.

The mattress further comprises the first magnetic means 110, 112 (or a first magnetic structural arrangement) mechanically coupled with the supporting means. The first magnetic means may comprise a first magnetic structure 110 and a second magnetic structure 112. Referring to Figure 1, the each magnetic structure of the first magnetic means may comprise a frame part that mechanically couples the magnetic structure to the supporting means. The frame part may be made of rigid material, e.g. wood or metal, and the frame part may attach the magnetic structure to the springs, to the top side, and/or to the side frame of the mattress. The point is that motion of the frame part of the magnetic structure causes the supporting means to move such that an object placed on the mattress 100 is moved along with the motion of the supporting means. For example, the frame part of the magnetic structure 110, 112 may be attached to an upper portion of the springs, as illustrated in Figure 1. The frame part of the magnetic structure may have a downwardly U-shaped cross-section as illustrated in Figure 1, or it may have an L-shaped cross-section when the frame part is fixed only to the top side of the mattress. The frame part may even have a straight line (I-shaped) cross-section when the frame part is attached to the side frame 103 of the mattress. The frame part includes a portion that extends in a vertical direction of the mattress (and vertical direction in the Figures), and a plurality of magnets may be attached to the vertical portion of the frame part of the magnetic structure 110, 112. Instead of using magnets, at least the vertical portion of the magnetic structure may comprise ferrite material, e.g. iron, motionally responsive to magnetic fields.

The mattress further comprises the second magnetic means 114, 116 (or a second magnetic structural arrangement) that are fixed to the base structure 102 of the mattress. The second magnetic means may also comprise a first magnetic structure 114 and a second magnetic structure 116. Each magnetic structure 114, 116 of the second magnetic means may also comprise a frame part that mechanically fixes the magnetic structure 114, 116 to the frame of the mattress. The frame part of the magnetic structure 114, 116 may be made of wood or metal, and it may be fixed to the base 102 (bottom) of the mattress with screws, welding, or with any other fixing method. The frame part includes a portion that extends upwards from the base in a vertical direction of the mattress (and vertical direction in the Figures), and a plurality of magnets may be attached to the vertical portion of the frame part of the magnetic structures 114, 116. Instead of using magnets, at least the vertical portion of the first magnetic means may comprise ferrite material, e.g. iron, motionally responsive to magnetic fields.

According to the above-described structure, the first magnetic structures 110, 114 form a first magnetic pair, and second magnetic structures 112, 116 form a second magnetic pair, wherein each magnetic pair is arranged to cooperate magnetically so as to move the first magnetic means 110, 112 according to the magnetic field generated between each magnetic pair. At least one of the structures of each magnetic pair may comprise magnets so as to enable the generation of magnetic fields between the pairs. The more magnets are included in the magnetic pair, the stronger is the magnetic interaction. In some embodiments, both structures of each magnetic pair comprise magnets with which the controller 120 is configured to provide variable electric current to generate the magnetic interaction.

Each structural entity of the first and second magnetic means 110 to 116 may comprise the magnets disposed in the vertical portion of the frame part as a single magnetic component or as a plurality of magnetic sub-components. The latter embodiment is illustrated in Figure 1, wherein each structural entity 110 to 116 comprises four magnetic elements arranged in a vertical order. The number of magnetic sub-components or, in general, the amount of magnets in the magnetic means 110 to 116 depends on the design and the required magnetic force, and the skilled person is able to determine the correct amount of magnets to realize a desired motion on the basis of this description and routine experimentation.

The frame parts of the first and second magnetic means 110 to 116 may be arranged with respect to each other in such proximity and orientation that, in result to magnetic field applied between the first and second magnetic means, the magnetic interaction draws the first and second magnetic means towards each other in a first phase, and pushes the first and second magnetic means away from each other in a second phase. As a result of this magnetic interaction, the first magnetic means move towards and away from the fixed second magnetic means, thereby causing motion in the supporting means. This movement of the supporting means is arranged to cause motion on the top side of the mattress, thereby conveying the motion to the object (person) lying on the mattress. The motion being a lateral back and forth motion, as described below.

In order to generate the magnetic fields between the first and second magnetic means 110 to 116, electric current may be applied to magnets comprised in at least one of the first and second magnetic means, and the electric current may be supplied by a voltage source 122 under the control of a controller 120. The voltage source 122 may be a 12V DC (direct current) voltage source, although low-voltage AC (alternating current) voltage sources may be utilized as well. Preferably, the voltage source is a low-voltage source, e.g. 12V, below the mains voltage to avoid safety hazards. The controller 120 may be configured to modulate the signal provided by the voltage source so as to implement a signal that has a varying level, thereby causing a variable signal. The variable electric signal is applied to the magnets, thereby inducing a variable magnetic field between the first and second magnetic means. The variable magnetic field causes the first magnetic means to move in response to the variations in the magnetic field, thereby moving the supporting means and the top side of the mattress so that the person lying on the bed experiences the motion. The controller 120 may be configured to modify the electric current to be periodic and to include smooth signal level variations such that the motion of the first magnetic means is smooth. As a consequence, the electric current applied to the magnets may have a fixed frequency and very low bandwidth, e.g. a sine wave. The frequency is preferably less than one Hertz, e.g. 0.1 Hz, 0.2 Hz, 0.3 Hz, 0.4 Hz, 0.5 Hz, or any value between them. The signal processing carried out by the controller 120 may be selectable by a user through a remote control 124 connected to the controller 120. The remote controller 124 may be provided outside the mattress structure either attached to an outer surface of the mattress or at an end of a cord. In other embodiments, the remote controller 124 is a cordless remote controller, wherein a receiver may be disposed on the outer surface of the mattress 100. The cordless communication may be based on infrared or radio communication. The remote controller 124 may be used to select a desired program affecting the frequency, duration, and amplitude of the motion. The controller 120 may comprise a timer to count the duration for the motion generation. The amplitude of the back and forth motion experienced by the person on the mattress and as provided by the mattress arrangement may be between 1 and 10 centimeters, e.g. 5 centimeters. Obviously, it is possible to generate non-uniform back-and-forth motion by configuring the controller 120 to suitably modulate the electric signal applied to the magnetic means. The controller 120 may be connected to a memory storing parameters for different programs for modifying the electric signal so as to implement different motions, and the remote controller 124 may be used to select the program.

With respect to the definition of directions, it should be understood that vertical refers to the up-down direction when the mattress is placed on a surface (e.g. a floor or a frame of a bed) in such manner that it is in practice used (largest plane against the surface). Lateral should be understood as a direction in a horizontal plane perpendicular to the vertical direction and as a direction which is perpendicular to a longitudinal axis of the mattress, wherein the longitudinal axis is an axis how a person sleeping on the mattress is expected to settle on the mattress. As a consequence, the person lying on the mattress, as he/she is intended to lie, experiences the back and forth swinging motion as a gentle left-right motion.

It should be realized that there are other designs for realizing the magnetic means 110 to 116. For example, instead of using magnets that are arranged to overlap in the vertical direction in order to cause lateral motion as illustrated in Figure 1, crosswisely disposed tube magnets may be used. In such an embodiment, the magnetic structures 110, to 116 may be replaced by cylinder-piston pairs disposed diagonally and crosswisely in the mattress. For example, magnetic structures 110, 112 may be realized by magnetic pistons, and magnetic structures 114, 116 may be replaced by magnetic cylinders, and magnetic structures 110, 116 form a first magnetic piston-cylinder pair, while magnetic structures 112, 114 form a second magnetic piston-cylinder pair in the form of tube magnets. Obviously, magnetic structures 110, 112 may be realized by magnetic cylinders, and magnetic structures 114, 116 may be replaced by magnetic pistons to achieve the same result. Generation of variable magnetic field in the piston-cylinder pairs generates the motion of the tube magnet (extension or depression), thereby moving the supporting means and causing the lateral (and possibly some vertical) motion of the top side of the mattress 100.

Magnetic material comprised in the vertical portions of the first and second magnetic means may be arranged to extend in vertical direction in such degree that when the supporting means (springs) of the mattress are at rest, and no weight is put on the mattress), there is low or no overlapping between magnetic portions of the first and second magnetic means, as illustrated in Figure 1. As a consequence, if a magnetic field is applied between the first and second magnetic means, the motion of the first magnetic means and the supporting means caused by the magnetic interaction is low or negligible. However, when an object is placed on the mattress, the supporting means are depressed in the vertical direction in the area below and close to the location of the object on the mattress. As a consequence, the frame parts of the first magnetic means 110, 112 mechanically connected to the supporting means are depressed downward along with the supporting means (See Figure 2). Then, the magnetic material comprised in the vertical portions of the first magnetic means 110, 112 are also moved downward towards the base of the mattress such that overlapping between the first magnetic means and second magnetic means is increased, as illustrated in Figure 2 in comparison with Figure 1. This results in that the magnetic interaction between the first and second magnetic means is stronger because of increased overlapping and area of magnetic interaction. Therefore, a higher magnetic force is applied to the first magnetic means. This arrangement results in that the magnetic force causing the back and forth motion in the mattress is proportional to the weight of the person lying on the bed. This arrangement has an advantage that, with suitable parameters of the first and second magnetic means, the amplitude of the back and forth motion may be kept constant regardless of the weight of the person lying on the bed. With respect to a light-weight person, the supporting means of the mattress and the first magnetic means 110, 112 are less depressed downwards and, therefore, there is less overlapping between the first and second magnetic means 110 to 116, thus resulting in that the magnetic force moving the first magnetic means is low. Given amplitude for swinging may be achieved for the light-weight person with lower magnetic force than for a heavy-weight person. With respect to the heavy-weight person, in order to reach the same amplitude for the swinging, more magnetic force is needed to move the first magnetic means, the supporting means, and the heavy-weight person. This is achieved by suitable arrangement of the first magnetic means such that the increased depression caused by the heavier person increases the overlapping, resulting in greater magnetic force between the first and second magnetic means 110 to 116. It should be noted that some components (controllers 120, 124, voltage source 122, and signal lines from the controller 120 to the magnetic means 110 to 116) have been omitted from Figure 2 in order to maintain clarity.

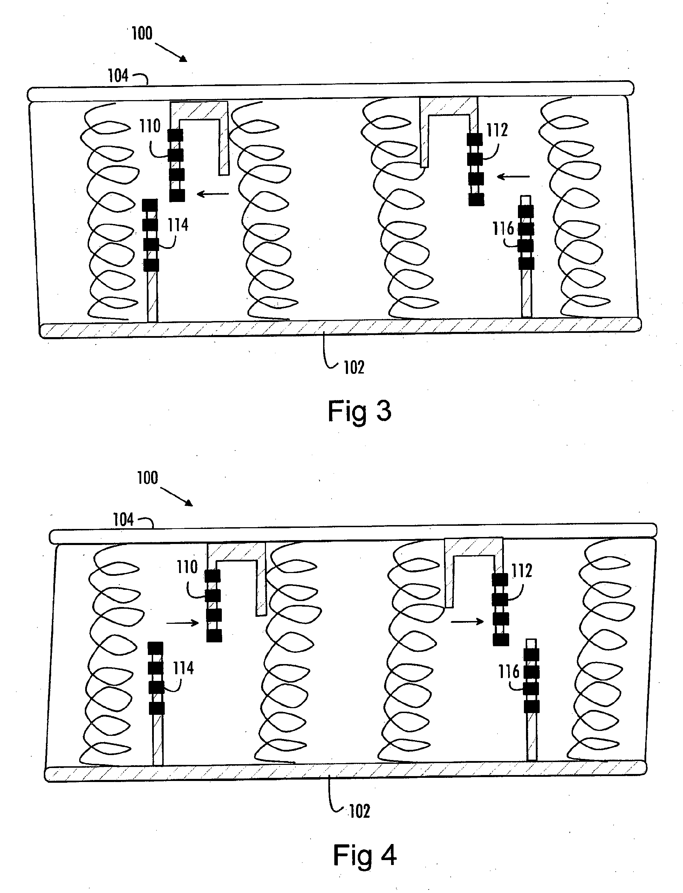

Figures 3 and 4 illustrate the motion of the mattress. It should be appreciated that some components (controller 120 etc.) have been omitted from the Figures in order to improve the clarity. Figure 3 illustrates a first phase of the operation of the arrangement according to an embodiment of the invention. In the first phase, the controller 120 is arranged to generate a magnetic field between the first magnetic pair 110, 114 such that the magnetic structures 110, 114 are drawn towards each other. In an embodiment where only one of the magnetic structures is provided with magnet(s), the controller applies the electric current only to the magnets, and polarity of the generated magnetic field plays no role, as the ferromagnetic material is inherently drawn to magnetic field having both polarities. In an embodiment where both magnetic structures contain magnets, the controller 120 is arranged to apply to the magnets electric currents having opposite polarities, thereby inducing between the magnetic structures 110, 114 magnetic fields having the opposite polarities that draw the first magnetic pair 110, 114 towards each other. Simultaneously, the controller 120 is arranged to generate a magnetic field between the second magnetic pair 112, 116 such that the magnetic structures 112, 116 repel each other, i.e. push the magnetic structures 112, 116 away from each other. In an embodiment where only one of the magnetic structures is provided with magnet(s), the controller 120 may cease applying electric current to magnet(s) of the second magnetic pair 112, 116. As a consequence, the second magnetic pair is passive in the first phase, i.e. there is no magnetic field between the second magnetic pair. In an embodiment where both magnetic structures contain magnets, the controller 120 is arranged to apply to the magnets electric currents having the same polarity, thereby inducing between the magnetic structures 110, 114 magnetic fields having the same polarity so that the first magnetic pair 110, 114 repels each other. Because of this magnetic interaction, the first magnetic means 110, 112 are forced to move laterally to the same direction (left in Figure 3), thereby moving the supporting means of the mattress, and the person lying on the mattress experience a lateral (left-ward) motion in the first phase.

In a second phase illustrated in Figure 4, the controller 120 is configured to generate a magnetic field between the first magnetic pair 110, 114 such that the magnetic structures 110, 114 repel each other or are passive as described above with respect to the second magnetic pair 112, 116. Simultaneously, the controller 120 is configured to generate a magnetic field between the second magnetic pair 112, 116 such that the magnetic structures 112, 116 are drawn towards each other, as described above in connection with the first magnetic pair 110, 114. In other words, electric currents inducing magnetic fields having opposite polarities may be applied to the magnets of the first magnetic pair such that the magnetic interaction is achieved. Because of this magnetic interaction, the first magnetic means 110, 112 are forced to move laterally to the same direction (right in Figure 4), thereby moving the supporting means of the mattress, and the person lying on the mattress experience an opposite lateral (right-ward) motion in the second phase. The controller 120 is configured to alternate the first and second phase so as to cause continuous back and forth motion of the first magnetic means 110, 112 and the supporting means. In a preferred embodiment, the motion of the first magnetic means is lateral, as described above. However, it may be foreseen that the magnetic pairs are arranged such that the motion is vertical. As a consequence, the first magnetic pair is raised while the second magnetic pair is lowered in the first phase, and the first magnetic pair is lowered while the second magnetic pair is raised in the second phase. This back and forth motion of the first magnetic means and the supporting means also causes the person lying on the bed to experience swinging motion. Obviously, the magnetic pairs may be arranged such that the motion includes both lateral and vertical components, as described above in connection with tube magnets, for example.

In order to generate the back and forth motion, the controller 120 is configured to alternate the magnetic fields it generates between the magnetic pairs. This may be achieved by changing properties of the electric current applied to each magnetic pair. The properties tuned by the controller 120 may include the polarity and the strength of the electric current and, thereby, the controller 120 causes the magnetic field between the first magnetic means 110,112 and the second magnetic means 114, 116 to have a variable polarity and the strength. The properties of the electric current may be changed such that the properties are periodic, i.e. the controller 120 applies to the magnets a periodic signal. A periodic swinging facilitates falling into sleep, as the motion is regular and it follows a repetitive pattern. The controller may be configured to modulate the electric signal provided by the voltage source to generate the signal with desired properties. The periodic signal may be an alternating current, e.g. a sine wave, wherein the polarity of the magnetic field is changed during a period of the sine wave. When the first and second magnetic means 110 to 116 both comprise the magnets, the controller 120 is configured to apply to the second magnetic pair 112, 116 the same sine wave in the first phase (Figure 3), thereby causing the repulsion. Furthermore, the controller 120 may apply to the first magnetic pair 110, 114 two sine waves having the same frequency but opposite phases, thereby causing different polarities in the magnetic fields between the first magnetic pair, and the magnetic force that draws the first magnetic pair 110, 114 towards each other in the first phase. In the second phase, the controller 120 is configured to apply to the first magnetic pair 110, 114 the same sine wave (Figure 4), thereby causing the repulsion. Simultaneously, the controller 120 applies to the second magnetic pair 112, 116 two sine waves having the same frequency but opposite phases, thereby causing different polarities in the magnetic fields between the second magnetic pair 112, 116, and the magnetic force that draws the second magnetic pair 112, 116 towards each other in the second phase. The sine wave has advantageous properties also in the sense that magnitude of the waveform rises and descends smoothly, thereby causing smooth changes in the magnetic fields and in the mechanical motion of the supporting means. Thus, the person lying on the bed experiences a smooth swinging motion. However, it should be understood that the controller 120 may be configured to utilize other waveforms. For example, when only one of the first and second magnetic means comprise the magnets, the controller may apply a half period (positive or negative polarity) of the sine wave alternately to the first and second magnetic pair, thereby causing a scenario where the first and second magnetic pair are operated alternately while the other one is passive.

As there are magnetic fields between the first and second magnetic means arranged inside the mattress, the magnetic fields may extend to surroundings of the mattress and to the person lying on the bed. In order to prevent the exposure of humans to the magnetic fields, a magnetic shielding may be arranged to cover the first and second magnetic means. The magnetic shielding may comprise a metallic layer that absorbs or negates the magnetic fields yet maintaining the elastic properties of the mattress. The shielding may comprise metallic wire-netting and/or a cover made of tin foil, for example. The shielding may be arranged inside the mattress and between the magnetic means and the top side of the mattress so as to provide the shielding effect upwards.

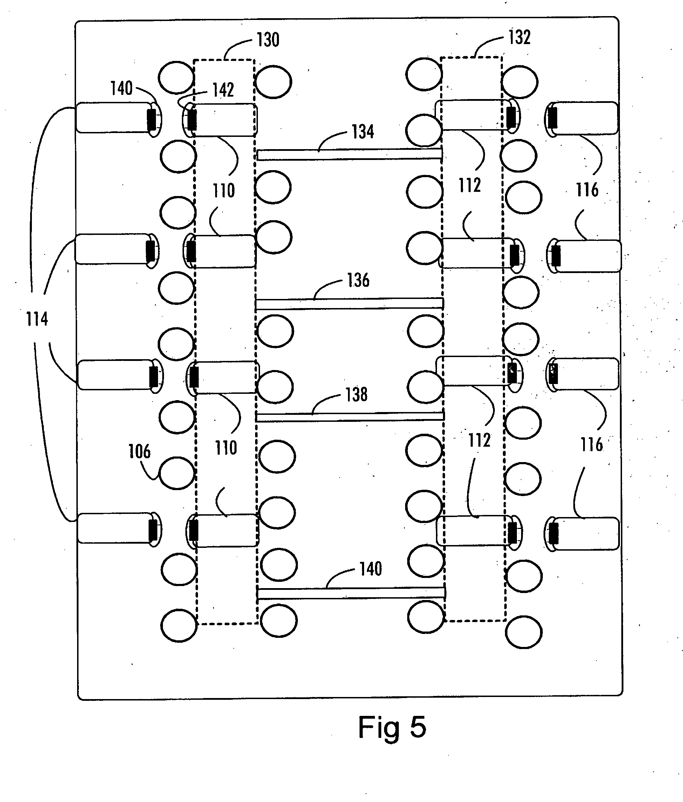

Figure 5 illustrates the mattress of previous Figures when viewed from above/below. The first magnetic means 110, 112 may comprise a plurality of magnetic structures arranged along two (or more) lines inside the mattress, e.g. along the longitudinal axis of the mattress (from the head end towards the foot end). The magnetic structures arranged along a given longitudinal line may be mechanically connected to each other by a rigid structure 130, 132, e.g. a metal or wooden plate, rod, etc. In other words series of magnetic structures arranged along a given longitudinal line forms a single mechanically connected structure. These mechanically connected structures 130, 132 may be connected to each other laterally by lateral support structures 134, 136, 138, 140 in order to provide a rigid structure for the first magnetic means and to ensure that the motion of the first magnetic means is uniform throughout the area of effect. Rounds in Figure 5 represent the springs 106 (or other supporting means providing vertical support). The longitudinal rigid structures 130, 132 of the first magnetic means may be arranged to be in a mechanical contact with the supporting means from two or even three sides so as to maximize the motion of the supporting means. As illustrated in Figure 5, the structures 130, 132 may be arranged to be in the mechanical contact with the springs on two sides and, additionally, the structures 130, 132 may be in the mechanical contact with the top side of the mattress. There may be padding on top of the top side such that the softness of the mattress is not degraded. The second magnetic means 114, 116 comprise counterparts for the first magnetic means 110, 112. As the second magnetic means are fixed to the frame of the mattress, the frame fixes the second magnetic means.

Each magnetic pair of the first and the magnetic means may be provided with elastic pads 140, 142 configured to avoid or dampen mechanical contact between the first and second magnetic means. Preferably, the magnetic interaction between the first and second magnetic means is arranged such that the structures of the first and second magnetic means do not come into mechanical contact with each other. However, to ensure that the user experience is not degraded even in a case where the magnetic force is so high that the structures of the first and second magnetic means would bump into each other, the elastic pads 140, 142 dampen the mechanical contact. As a consequence, the user does not even notice the contact.

It will be obvious to a person skilled in the art that, as technology advances, the inventive concept can be implemented in various ways. For example, while the invention is described in connection with a mattress that includes the springs as the supporting means inside the mattress, the present invention is equally applicable to water beds where water functions as the supporting means. In some water beds, the water is contained in a plurality of cells, and in such embodiments the walls of each cell also function as the supporting means. The mechanical motion caused by the present invention moves the water (and the walls) inside the water bed, and the swinging user experience is achieved. In general, the invention is applicable to mattresses where the supporting means are realized by a uniform material filling the mattress, and the magnetic means are arranged to cause the motion of the uniform material, thereby causing the motion of the top side of the mattress. Such a material may be foamed plastic or other foamed material providing flexible support for the mattress. Therefore, the invention and its embodiments are not limited to the examples described above but may vary within the scope of the claims.

## Claims

1. A mattress (100) comprising:
a base structure (102, 103, 106) providing the mattress (100) with a frame, comprising supporting means (106) disposed inside the mattress (100) to provide an object placed on the mattress (100) with vertical elastic support, wherein the supporting means (106) are elastic both vertically and horizontally;
**characterized by** the mattress (100) further comprising:
first magnetic means (110, 112) coupled mechanically with the supporting means (106) such that motion of the first magnetic means (110, 112) causes motion of the supporting means (106), wherein the motion of the first magnetic means (110,112) is responsive to magnetic fields sensed by the first magnetic means (110, 112);
second magnetic means (114, 116) fixed to the base structure (102, 103, 106) of the mattress (100) and, in operation, magnetically coupled with the first magnetic means (110, 112) such that a variation in the magnetic field generated between the first magnetic means (110, 112) and the second magnetic means (114, 116) is arranged to cause lateral motion between the first magnetic means (110, 112) and the second magnetic means (114, 116), thereby moving the supporting means (106) laterally in accordance with the magnetic field; and
generator means (120, 122) for generating a variable magnetic field between the first magnetic means (110, 112) and the second magnetic means (114, 116) so as to cause back and forth motion of the first magnetic means (110, 112) and the supporting means (106) and to cause a person lying on the mattress (100) to experience lateral back and forth motion.

2. The mattress (100) of claim 1, wherein the first magnetic means (110, 112) and the second magnetic means (114, 116) are arranged to overlap in a vertical direction in such manner that the overlapping increases in proportion to a weight of the object placed on the mattress (100), and wherein the increase in the area of interaction is achieved by mechanical depression of the supporting means (106) in response to the weight of the object, thereby depressing the magnetic means with respect to the fixed second magnetic means (114, 116), increasing the overlapping, and resulting in a stronger magnetic interaction.

3. The mattress (100) of claim 1 or 2, wherein the first magnetic means (110, 112) and the second magnetic means (114, 116) are arranged with respect to each other in such manner that the applied magnetic field causes lateral motion of the magnetic means, thereby resulting in lateral back and forth motion of the supporting means (106).

4. The mattress (100) of any preceding claim, wherein amplitude of the periodic back and forth motion is less than ten centimeters.

5. The mattress (100) of any preceding claim, wherein at least one of the first magnetic means (110, 112) and the second magnetic means (114, 116) comprise a magnet, and wherein the generator means (120, 122) are arranged to apply an electric current to the magnet, wherein the polarity and the strength of the electric current are variable, thereby causing the magnetic field between the first magnetic means (110, 112) and the second magnetic means (114, 116) to have a variable polarity and the strength.

6. The mattress (100) of claim 5, wherein the first magnetic means (110, 112) and the second magnetic means (114, 116) both comprise magnets, and wherein the generator means (120, 122) are arranged to apply an electric current to the magnets of the first magnetic means (110, 112) and the second magnetic means (114, 116).

7. The mattress (100) of any preceding claim, wherein the generator means (120, 122) are arranged to generate a periodic magnetic field.

8. The mattress (100) of any preceding claim, further comprising a magnetic shielding element covering the first magnetic means (110, 112) and the second magnetic means (114, 116) so as to shield the object placed on the mattress from magnetic fields.

9. The mattress (100) of any preceding claim, wherein at least one of the first magnetic means (110, 112) and the second magnetic means (114, 116) are provided with elastic pads (140, 142) configured to dampen mechanical contact between the first magnetic means (110, 112) and the second magnetic means (114, 116).

10. The mattress (100) of any preceding claim, wherein the generator means (120, 122) comprise a voltage source (122) and a controller (120) configured to modulate a signal provided by the voltage source (122) so as to output the electric current having variable strength and polarity to at least one of the first magnetic means (110, 112) and the second magnetic means (114, 116).

## Patentansprüche

1. Matratze (100), aufweisend:
eine Grundstruktur (102, 103, 106), welche die Matratze (100) mit einem Rahmen ausstattet, die Stützmittel (106) aufweist, die innerhalb der Matratze (100) angeordnet sind, um ein Objekt, das auf der Matratze (100) platziert ist, mit einer vertikalen elastischen Unterstützung zu versehen, wobei die Stützmittel (106) sowohl vertikal als auch horizontal elastisch sind;
**dadurch gekennzeichnet, dass** die Matratze (100) ferner aufweist:
erste magnetische Mittel (110, 112), die mechanisch mit den Stützmitteln (106) gekoppelt sind, sodass die Bewegung der ersten magnetischen Mittel (110, 112) eine Bewegung der Stützmittel (106) bewirkt, wobei die Bewegung der ersten magnetischen Mittel (110, 112) auf Magnetfelder reagiert, die durch die ersten magnetischen Mittel (110, 112) erfasst werden;
zweite magnetische Mittel (114, 116), die an der Grundstruktur (102, 103, 106) der Matratze (100) befestigt sind und im Betrieb mit den ersten magnetischen Mitteln (110, 112) magnetisch gekoppelt sind, sodass ein Unterschied im Magnetfeld, das zwischen den ersten magnetischen Mitteln (110, 112) und den zweiten magnetischen Mitteln (114, 116) erzeugt wird, derart ausgeführt ist, dass eine seitliche Bewegung zwischen den ersten magnetischen Mitteln (110, 112) und den zweiten magnetischen Mitteln (114, 116) bewirkt wird, wodurch die Stützmittel (106) gemäß dem Magnetfeld seitwärts bewegt werden; und
Erzeugermittel (120, 122) für das Erzeugen eines variablen Magnetfeldes zwischen den ersten magnetischen Mitteln (110, 112) und den zweiten magnetischen Mitteln (114, 116), sodass eine Hin- und Herbewegung der ersten magnetischen Mittel (110, 112) und der Stützmittel (106) bewirkt wird, und sodass eine Person, die auf der Matratze (100) liegt, eine seitliche Hin- und Herbewegung erfährt.

2. Matratze (100) nach Anspruch 1, wobei die ersten magnetischen Mittel (110, 112) und die zweiten magnetischen Mittel (114, 116) derart angeordnet sind, dass sie sich in einer vertikalen Richtung auf solche Weise überlappen, dass das Überlappen proportional zu einem Gewicht des auf der Matratze (100) angeordneten Objekts zunimmt, und wobei die Zunahme im Bereich der Wechselwirkung durch ein mechanisches Vertiefen der Stützmittel (106) als Reaktion auf das Gewicht des Objekts erreicht wird, wodurch die magnetischen Mittel in Bezug auf die festen zweiten magnetischen Mittel (114, 116) niedergedrückt werden, was das Überlappen vergrößert und in einer stärkeren magnetischen Wechselwirkung resultiert.

3. Matratze (100) nach Anspruch 1 oder 2, wobei die ersten magnetischen Mittel (110, 112) und die zweiten magnetischen Mittel (114, 116) zueinander in solcher Weise angeordnet sind, dass das angewandte Magnetfeld eine seitliche Bewegung der magnetischen Mittel bewirkt, was in einer seitlichen Hin- und Herbewegung der Stützmittel (106) resultiert.

4. Matratze (100) nach irgendeinem vorstehenden Anspruch, wobei die Amplitude der periodischen Hin- und Herbewegung kleiner ist als zehn Zentimeter.

5. Matratze (100) nach irgendeinem vorstehenden Anspruch, wobei mindestens eines von den ersten magnetische Mitteln (110, 112) und den zweiten magnetischen Mitteln (114, 116) einen Magneten aufweist, und wobei die Erzeugermittel (120, 122) ausgeführt sind, einen elektrischen Strom auf den Magneten anzuwenden, wobei die Polarität und die Stärke des elektrischen Stroms variabel sind, wodurch bewirkt wird, dass das Magnetfeld zwischen den ersten magnetischen Mitteln (110, 112) und den zweiten magnetischen Mitteln (114, 116), eine variable Polarität und Stärke aufweist.

6. Matratze (100) nach Anspruch 5, wobei sowohl die ersten magnetischen Mittel (110, 112) als auch die zweiten magnetischen Mittel (114, 116) Magnete aufweisen, und wobei die Erzeugermittel (120, 122) ausgeführt sind, einen elektrischen Strom an den Magneten der ersten magnetischen Mittel (110, 112) und der zweiten magnetischen Mittel (114, 116) anzuwenden.

7. Matratze (100) nach irgendeinem vorstehenden Anspruch, wobei die Erzeugermittel (120, 122) ausgeführt sind, ein periodisches Magnetfeld zu erzeugen.

8. Matratze (100) nach irgendeinem vorstehenden Anspruch, ferner aufweisend ein Magnetabschirmungselement, das die ersten magnetischen Mittel (110, 112) und die zweiten magnetischen Mittel (114, 116) abdeckt, um das Objekt, das auf der Matratze platziert ist, von Magnetfeldern abzuschirmen.

9. Matratze (100) nach irgendeinem vorstehenden Anspruch, wobei mindestens eines von den ersten magnetischen Mitteln (110, 112) und den zweiten magnetischen Mitteln (114, 116) mit elastischen Kissen (140, 142) ausgestattet ist, die konfiguriert sind, mechanischen Kontakt zwischen den ersten magnetischen Mitteln (110, 112) und den zweiten magnetischen Mitteln (114, 116) zu dämpfen.

10. Matratze (100) nach irgendeinem vorstehenden Anspruch, wobei die Erzeugermittel (120, 122) eine Spannungsquelle (122) und eine Steuerung (120) aufweisen, die konfiguriert ist, ein Signal zu modulieren, das von der Spannungsquelle (122) bereitgestellt wird, um den elektrischen Strom, der eine variable Stärke und Polarität aufweist, an mindestens eines von den ersten magnetischen Mitteln (110, 112) und den zweiten magnetischen Mitteln (114, 116) auszugeben.

## Revendications

1. Matelas (100) comprenant :
une structure de base (102, 103, 106) procurant au matelas (100) un cadre, comprenant des moyens de support (106) disposés à l'intérieur du matelas (100) pour procurer à un objet placé sur le matelas (100) un support élastique vertical, dans lequel les moyens de support (106) sont élastiques tant verticalement qu'horizontalement ;
**caractérisé en ce que** le matelas (100) comprend en outre :
des premiers moyens magnétiques (110, 112) couplés mécaniquement aux moyens de support (106) de sorte que le mouvement des premiers moyens magnétiques (110, 112) provoque le mouvement des moyens de support (106), dans lequel le mouvement des premiers moyens magnétiques (110, 112) est sensible à des champs magnétiques détectés par les premiers moyens magnétiques (110, 112) ;
des seconds moyens magnétiques (114, 116) fixés à la structure de base (102, 103, 106) du matelas (100) et, en fonctionnement, magnétiquement couplés aux premiers moyens magnétiques (110, 112) de sorte qu'une variation dans le champ magnétique produit entre les premiers moyens magnétiques (110, 112) et les seconds moyens magnétiques (114, 116) est agencée pour provoquer un mouvement latéral entre les premiers moyens magnétiques (110, 112) et les seconds moyens magnétiques (114, 116), déplaçant de ce fait les moyens de support (106) latéralement selon le champ magnétique ; et
des moyens générateurs (120, 122) pour produire un champ magnétique variable entre les premiers moyens magnétiques (110, 112) et les seconds moyens magnétiques (114, 116) de façon à provoquer un mouvement dans les deux sens des premiers moyens magnétiques (110, 112) et les moyens de support (106) et à amener une personne reposant sur le matelas (100) à éprouver un mouvement latéral dans les deux sens.

2. Matelas (100) selon la revendication 1, dans lequel les premiers moyens magnétiques (110, 112) et les seconds moyens magnétiques (114, 116) sont agencés pour se chevaucher dans une direction verticale de telle façon que le chevauchement augmente en proportion à un poids de l'objet placé sur le matelas (100), et dans lequel l'augmentation de la surface d'interaction est obtenue par l'enfoncement mécanique des moyens de support (106) en réponse au poids de l'objet, enfonçant de ce fait les moyens magnétiques par rapport aux seconds moyens magnétiques fixes (114, 116), augmentant le chevauchement, et aboutissant à une interaction magnétique plus forte.

3. Matelas (100) selon la revendication 1 ou 2, dans lequel les premiers moyens magnétiques (110, 112) et les seconds moyens magnétiques (114, 116) sont agencés les uns par rapport aux autres de telle façon que le champ magnétique appliqué provoque un mouvement latéral des moyens magnétiques, aboutissant de ce fait à un mouvement latéral dans les deux sens des moyens de support (106).

4. Matelas (100) selon n'importe quelle revendication précédente, dans lequel l'amplitude du mouvement périodique dans les deux sens est inférieure à dix centimètres.

5. Matelas (100) selon n'importe quelle revendication précédente, dans lequel au moins un des premiers moyens magnétiques (110, 112) et des seconds moyens magnétiques (114, 116) comprend un aimant, et dans lequel les moyens générateurs (120, 122) sont agencés pour appliquer un courant électrique à l'aimant, dans lequel la polarité et l'intensité du courant électrique sont variables, amenant de ce fait le champ magnétique entre les premiers moyens magnétiques (110, 112) et les seconds moyens magnétiques (114, 116) à avoir une polarité et une intensité variables.

6. Matelas (100) selon la revendication. 5, dans lequel les premiers moyens magnétiques (110, 112) et les seconds moyens magnétiques (114, 116) comprennent tous les deux des aimants, et dans lequel les moyens générateurs (120, 122) sont agencés pour appliquer un courant électrique aux aimants des premiers moyens magnétiques (110, 112) et des seconds moyens magnétiques (114, 116).

7. Matelas (100) selon n'importe quelle revendication précédente, dans lequel les moyens générateurs (120, 122) sont agencés pour produire un champ magnétique périodique.

8. Matelas (100) selon n'importe quelle revendication précédente, comprenant en outre un élément de protection magnétique couvrant les premiers moyens magnétiques (110, 112) et les seconds moyens magnétiques (114, 116) afin de protéger l'objet placé sur le matelas contre les champs magnétiques.

9. Matelas (100) selon n'importe quelle revendication précédente, dans lequel au moins un des premiers moyens magnétiques (110, 112) et des seconds moyens magnétiques (114, 116) sont munis de plaquettes élastiques (140, 142) configurées pour amortir un contact mécanique entre les premiers moyens magnétiques (110, 112) et les seconds moyens magnétiques (114, 116).

10. Matelas (100) selon n'importe quelle revendication précédente, dans lequel les moyens générateurs (120, 122) comprennent une source de tension (122) et une unité de commande (120) configurée pour moduler un signal fourni par la source de tension (122) afin de sortir le courant électrique ayant une intensité et une polarité variables vers au moins un des premiers moyens magnétiques (110, 112) et des seconds moyens magnétiques (114, 116).
